Europäisches Patentamt

European Patent Office

Office européen des brevets

(19)

(11) **EP 0 652 501 B1**

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(51) Int Cl.⁶: **G05D 16/00**

(21) Anmeldenummer: **94115902.2**

(22) Anmeldetag: **08.10.1994**

(54) **Mehrfachstellgerät mit eingangsseitigem Regler**

Multiple regulating apparatus with input governor

Appareil de positionnement multiple avec régulateur d'entrée

(84) Benannte Vertragsstaaten:
**AT BE CH DE FR GB IT LI NL**

(30) Priorität: **05.11.1993 DE 9316918 U**

(43) Veröffentlichungstag der Anmeldung:
**10.05.1995 Patentblatt 1995/19**

(73) Patentinhaber: **KARL DUNGS GMBH & CO.**
**D-73660 Urbach (DE)**

(72) Erfinder:
• **Schwarz, Walter**
**D-73614 Schorndorf (DE)**
• **Neu, Kunibert, Dr.**
**D-73117 Wangen/GP (DE)**

(74) Vertreter: **KOHLER SCHMID + PARTNER**
**Patentanwälte**
**Ruppmannstrasse 27**
**70565 Stuttgart (DE)**

(56) Entgegenhaltungen:
**EP-A- 0 056 758          EP-A- 0 183 157**
**EP-A- 0 433 595          DE-A- 3 146 591**

• **FIRMENSCHRIFT DER FIRMA KROMSCHRÖDER, "KOMPAKTEINHEITEN", 2/1989, INSBESONDERE "AUSFÜHRUNG CG., V", SEITEN 10 FF**

## Beschreibung

Die Erfindung betrifft einen Gas/Luft-Verhältnisdruckregler in einem Mehrfachstellgerät, bei dem die Verbrennungsluft und das Brenngas den statischen Druck $p_l$ bzw. $p_{br}$ aufweisen und der Feuerraumdruck $p_f$ herrscht mit

a) einem Gasdruckregelventil
b) einem Sicherheitsventil mit einer federbelasteten Schließstellung,
c) zwei mechanisch verbundenen Regelmembranen auf die einerseits der Feuerraumdruck $p_f$ eines Verbrennungswärmeerzeugers und andererseits auf die erste Membran der Druck $p_{br}$ und auf die zweite Membran der Druck $p_l$ wirken.

Ein solches Mehrfachstellgerät ist auf dem Markt bekannt und beispielsweise in der Firmenschrift der Firma Kromschröder mit dem Titel "Kompakteinheiten", 2/1989, insbesondere "Ausführung CG..V", Seiten 10 ff., zumindest teilweise beschrieben.

Pilot-Verbundregler für eine Gas/Luft-Verbundregelung sind an sich bereits beispielsweise aus DE-OS 31 46 591 oder DE-OS 34 43 532 bekannt. Sie sind dort jedoch nicht in Zusammenhang mit einem Mehrfachstellgerät der eingangs genannten Art beschrieben.

Das Prinzip der Servoregelung mit einem Druckmittelstrom ist auch aus der DE-OS 35 31 665 bekannt. Bei dem dort beschriebenen Membrandruckregler dient ein und dasselbe Ventil gleichzeitig als Regelventil und als Absperrventil für einen Druckmittelstrom. Durch vollständiges Schließen des Regelventils kann eine Sicherheitsabsperrung erfolgen. In der DE-OS 35 31 665 ist jedoch keine Gas/Luft-Verbundregelung, also die gleichzeitige Regelung eines Gemisches zweier Druckmittel beschrieben. Außerdem wird in der Druckschrift lediglich ein Einfachsitzventil zur Steuerung des Hauptvolumenstromes gezeigt und es sind auch keine miteinander verbundenen Regelmembranen vorhanden, von denen eine mit dem statischen Druck $p_l$ der Verbrennungsluft und die andere mit dem statischen Brennerdruck $p_{br}$ eines brennbaren Gases beaufschlagt wird.

Aus der DE-OS 40 08 493 schließlich ist zwar die Verwendung eines Doppelsitz-Hauptventils bekannt, welches bei einem Gasdruck-Regler, der nach dem Servoprinzip arbeitet, eingesetzt ist, jedoch ist ebensowenig wie bei der DE-OS 35 31 665 ein zusätzliches Sicherheitsventil vorgesehen und es fehlt auch eine zweite Regelmembran, so daß eine Gas/Luft-Verbundregelung mit einer derartigen Anordnung nicht möglich ist. Daher treten bei einem solchen Einfachstellgerät auch nicht die technischen Probleme auf, die die Konstruktion eines Mehrfachstellgerätes mit sich bringt.

Ein Nachteil der eingangs genannten bekannten Mehrfachstellgeräte, bei denen das Regelventil am Ausgang des Gasstromes angeordnet ist, besteht in einer relativ hohen Empfindlichkeit des Regelsystems gegen schnelle Druckschwankungen von der Brennerseite her, weil das Stellglied den vom Brenner her kommenden Druckimpulsen ziemlich direkt ausgesetzt ist. Ein weiterer Nachteil der bekannten Geräte liegt in der Benutzung eines Einfachventils als Regelventil, was zu einer hohen Abhängigkeit der Ventilfunktion vom Eingangsdruck führt. Das gleiche gilt auch für die Funktion des Sicherheitsventils, das überlicherweise ebenfalls als Einfachventil ausgeführt ist. Ein weiterer Nachteil der bekannten Geräte besteht darin, daß der auf das Regelventil wirkende Steuerdruck immer um den Druckabfall mindestens zweier Ventile vermindert ist, so daß nur ein wesentlich geringerer Teil der maximal nutzbaren Gasdruckenergie des strömenden Brenngases für den Steuerdruck ausgenutzt werden kann.

Aufgabe der vorliegenden Erfindung ist es daher, ein Mehrfachstellgerät der eingangs geschilderten Art vorzustellen, das eine geringere Empfindlichkeit des Regelsystems gegen schnelle Druckschwankungen von der Brennerseite her sowie eine geringe Abhängigkeit der Ventilfunktionen des Regelventils und des Sicherheitsventils vom Eingangsdruck aufweist. Außerdem soll eine wesentlich bessere Ausnutzung der im Gasdruck vorhandenen Energie für den Steuerdruck ermöglicht und das Schnellschlußverhalten des Sicherheitsventiles erheblich verbessert werden. Schließlich soll das Mehrfachstellgerät so aufgebaut sein, daß eine Dichtheitsprüfung durch Aufpumpen des Mittelraums mit Sicherheit nicht zu inneren Verspannungen an den Membranen oder anderen empfindlichen Teilen führt.

Erfindungsgemäß wird diese Aufgabe dadurch gelöst, daß das Regelventil und das Sicherheitsventil jeweils als Doppelsitzventile ausgebildet sind und zwei Ventilteller aufweisen, die in axialem Abstand an einer jeweiligen Ventilstange angeordnet sind und im geschlossenen Zustand dichtend jeweils auf zwei Ventilsitzen aufsitzen, daß das Regelventil am Eingang des Gasstromes zum Mehrfachstellgerät angeordnet ist und am unteren Ende der Ventilstange einen randseitig mit einer umlaufenden, dichtenden Steuermembran versehenen Membranteller aufweist, der auf seiner Unterseite mit dem Steuerdruck $p_{st}$ und an seiner Oberseite mit einem Mittelraumdruck $p_m$ aus einem Mitteldruckraum beaufschlagt ist, welcher kleiner oder gleich dem Eingangsdruck $p_e$ des zufließenden Gasstromes am Eingang ist, daß der Eingangsdruck $p_e$ des Gasstromes auf einen Steuerdruckraum wirken kann, dessen obere Begrenzung die Unterseite des Membrantellers des Regelventils bildet, daß der Steuerdruckraum über ein von der ersten Regelmembran betätigbares Steuerventil mit dem Brennerdruck $p_{br}$ verbunden ist, und daß ein 3/2-Wegeventil vorgesehen ist, welches so eingerichtet ist, daß es bei geschlossenem Sicherheitsventil die Verbindung zwischen dem Steuerventil und dem Steuerdruckraum absperrt und gleichzeitig eine Verbindung zwischen dem Mitteldruckraum und dem Steuerdruckraum öffnet, oder welches so eingerichtet ist, daß es bei geschlossenem Regelventil die Verbindung zwischen dem Steuerdruckraum und dem Eingang des Gasstromes absperrt und gleichzeitig eine Verbindung zwischen dem Mitteldruckraum und dem Steuerdruckraum öffnet. Vorzugsweise besitzt die axial bewegliche Ventilstange eine Längsbohrung, über die der Eingangsdruck $p_e$ des Gasstromes auf den Steuerdruckraum wirken kann.

Durch die eingangsseitige Anordnung des Regelventils ist einerseits eine maximale Energieausnutzung des Gasdrucks des einströmenden Brenngases für den Steuerdruck möglich, andererseits ist das Stellglied des Regelventils nicht mehr direkt den Druckimpulsen vom Brenner her ausgesetzt. Die Ausbildung des Regelventils und des Sicherheitsventils als Doppelsitzventile vermindert außerdem die Eingangsdruckabhängigkeit der Ventilfunktionen, da durch die Doppelsitzanordnung ein eingangsseitiger Druckkräfteausgleich bewirkt wird. Ein weiterer Vorteil des erfindungsgemäßen Mehrfachstellgerätes liegt darin, daß durch die Verbindung des Mitteldruckraums mit dem Raum oberhalb der Steuermembran einerseits und zu dem Gasstromeingang und damit über die Längsbohrung des Stellglieds zu dem Raum unterhalb der Steuermembran andererseits bei einer Druckprüfung des Mehrfachstellgeräts durch Aufpumpen des Mitteldruckraums an beiden Seiten der Steuermembran der gleiche Prüfdruck anliegt, so daß die Membran nicht unnötig nur einseitig belastet wird.

Vorzugsweise ist das 3/2-Wegeventil, welches bei geschlossenem Sicherheitsventil die Verbindung zwischen dem Steuerventil und dem Steuerdruckraum absperrt und gleichzeitig eine Verbindung zwischen dem Mitteldruckraum und dem Steuerdruckraum öffnet, an der Unterseite des Sicherheitsventils vorgesehen.

Bei einer vereinfachten Ausführungsform ist an der Oberseite des Stellglieds ein 3/2-Wegeventil vorgesehen, welches bei geschlossenem Regelventil die Verbindung zwischen dem Steuerdruckraum und dem Eingang des Gasstromes absperrt und gleichzeitig eine Verbindung zwischen dem Mitteldruckraum und dem Steuerdruckraum öffnet. Bei dieser Ausführungsform kann das 3/2-Wegeventil zwischen dem Steuerventil und dem Steuerdruckraum entfallen.

Für den Einsatz des erfindungsgemäßen Mehrfachstellgerätes bei höheren Drücken ist an der Oberseite des Stellgliedes ein 2/2-Wegeventil vorgesehen, das die Längsbohrung der Ventilstange gegenüber dem Eingangsdruck $p_e$ verschließen oder öffnen kann. Bei einer vereinfachten Ausführungsform, bei der dieses 2/2-Wegeventil nicht vorhanden ist, sollte der Druck im Steuerdruckraum dadurch begrenzt werden, daß keine höheren Eingangsdrücke $p_e$ als etwa 25 mbar zugelassen werden.

Bevorzugt ist auch eine Ausführungsform bei der zwischen dem Raum oberhalb der Steuermembran und dem Mitteldruckraum eine Dämpfungsdüse, zumindest in Form einer Bohrung geringen Durchmessers vorgesehen ist. Dadurch werden zu starke Druckschwankungen an der Steuermembrane vermieden.

Bei einer besonders kompakten Ausführungsform des erfindungsgemäßen Mehrfachstellgerätes sind die Regelmembranen unterhalb der Doppelsitzventile angeordnet und jeweils an ihrer Unterseite mit dem Feuerraumdruck $p_f$ beaufschlagt. An der Oberseite der ersten Regelmembran liegt der Brennerdruck $p_{br}$ und an der Oberseite der zweiten Regelmembran der Verbrennungsluftdruck $p_l$ an. Dies ermöglicht u.a. geometrisch besonders einfache Druckzuführungen.

Bei einer sehr einfachen Ausführungsform des erfindungsgemäßen Mehrfachstellgerätes umfaßt die mechanische Verbindung der beiden Regelmembranen eine Hebelmechanik mit festem Hebelarmverhältnis. Das Mehrfachstellgerät kann dann bei einem bestimmten, vorgegebenen Gas/Luftdruckverhältnis betrieben werden.

Bei einer etwas komfortableren Ausführungsform ist das Hebelarmverhältnis der Hebelmechanik veränderbar. Damit läßt sich in gewissen Grenzen ein jeweils gewünschter Betriebspunkt einstellen.

Bevorzugt ist eine Weiterbildung dieser Ausführungsform, bei der die Hebelmechanik einen auf einem insbesondere horizontal verschiebbaren Schneidenlager aufliegenden Waagebalken umfaßt. Eine solche Waagenkonstruktion ist besonders empfindlich und technisch relativ einfach herstellbar.

Besonders bevorzugt ist eine Weiterbildung, bei der an einem der beiden Waagearme, vorzugsweise auf der Seite der ersten Regelmembran, eine Federvorrichtung zum Austarieren der Momente am Waagebalken und zur Nullpunktverstellung des Momentengleichgewichts der Waage vorgesehen ist. Insbesondere können an der Gasregelmembran zwei gegeneinander wirkende Federn eingebaut sein. Eine solche Anordnung gestattet eine Kennlinien-Parallelverschiebung bei dem im Brenner angebotenen Gemisch in Richtung auf einen Gas- oder Luftüberschuß.

Technisch einfach realisierbar ist eine Ausführungsform, bei der die Vorrichtungen zur Überwindung der Schließfederkräfte Elektromagnete mit Magnetspulen und gegen die Federkraft der jeweiligen Schließfeder einziehbaren Ankern sind. Derartige Elektromagnete sind besonders genau und empfindlich ansteuerbar und im Gegensatz zu mechanischen Einrichtungen, die eine ähnliche Leistung erbringen könnten, relativ preisgünstig erhältlich.

Bevorzugt ist eine Weiterbildung dieser Ausführungsform, bei der die Magnetspulen elektrisch miteinander verbunden, vorzugsweise in Serie geschaltet sind. Dadurch wird nur eine gemeinsame Stromversorgung für beide Magnetspulen erforderlich.

Bei einer besonders bevorzugten Weiterbildung sind die Federkräfte der beiden Schließfedern und die beiden Magnetspulen jeweils gleich dimensioniert.

Dadurch kann auf einfache Weise ein gleichzeitiges Öffnen bzw. Schließen von Regelventil und Sicherheitsventil garantiert werden, so daß das Regelventil als zusätzliches schnelles Sicherheitsventil wirkt.

Bei einer besonders bevorzugten Ausführungsform des erfindungsgemäßen Mehrfachstellgerätes ist mindestens ein Doppelsitzventil, vorzugsweise das Regelventil und/oder das Sicherheitsventil, ausgeführt mit einem oberen Ventilsitz mit einem lichten Innendurchmesser $d_{SO}$ der oberen Ventilöffnung, mit einem darunter angeordneten unteren Ventilsitz mit einem lichten Innendurchmesser $d_{SU}$ der unteren Ventilöffnung und mit einem vorzugsweise einstückigen Ventilkörper, der einen oberen und einen unteren Ventilteller aufweist, wobei zumindest an der Unterseite der beiden Ventilteller jeweils ein elastomeres Dichtungsmittel vorgesehen ist und die Unterseiten der Dichtungsmittel in der geschlossenen Stellung des Doppelsitzventils auf dem oberen bzw. dem unteren Ventilsitz mit einer definierten Pressung aufliegen, die den Durchtritt des abzudichtenden Mediums verhindert, wobei der Außendurchmesser $d_{TO}$ des oberen Ventiltellers und der Außendurchmesser $d_{TU}$ des unteren Ventiltellers jeweils kleiner sind als der lichte Innendurchmesser $d_{SO}$ des oberen Ventilsitzes und wobei die elastomeren Dichtungsmittel sich in radialer Richtung weiter nach außen erstrecken als die beiden Ventilteller und einen oberen Außendurchmesser $d_{DO}$ bzw. einen unteren Außendurchmesser $d_{DU}$ aufweisen, der jeweils größer als der lichte Innendurchmesser $d_{SO}$ des oberen Ventilsitzes bzw. der lichte Innendurchmesser $d_{SU}$ des unteren Ventilsitzes ist, wobei der Außendurchmesser $d_{DU}$ des unteren Dichtungsmittels größer als der lichte Innendurchmesser $d_{SO}$ des oberen Ventilsitzes ist.

Dies hat den Vorteil, daß gegenüber bekannten Doppelsitzventilen auch der obere Ventilteller kleiner als der lichte Durchmesser des oberen Ventilsitzes ist, was zu einer Material- und Gewichtseinsparung führt. Der Außendurchmesser $d_{DU}$ des unteren Dichtungsmittels kann dabei gerade um soviel größer als der lichte Innendurchmesser $d_{SO}$ des oberen Ventilsitzes gewählt werden, daß die Elastizität des Dichtungsmittels ausreicht, um den unteren Ventilteller durch die obere Ventilöffnung hindurchzuführen. Dazu kann der untere Ventilteller beispielsweise unter einem geeigneten Winkel durch die obere Ventilöffnung hindurchgewunden oder mit Hilfe einer geeigneten Vorrichtung mit einem Einlaufkegel hindurchgedrückt werden. Weiterhin kann der beim Stand der Technik notwendige Unterschied zwischen dem Innendurchmesser $d'_{SO}$ und $d'_{SU}$ der beiden Ventilsitze verringert werden. Da der Anpreßdruck, mit dem die Dichtungsmittel gegen die Dichtflächen der Ventilsitze gedrückt werden, insbesondere von der Fläche der Auflage abhängt, führt eine Reduzierung des Unterschieds der Innendurchmesser $d'_{SO}$ und $d'_{SU}$ zu einer besseren gleichmäßigen Anpreßdruckverteilung der beiden Ventilsitze.

Bei den Dichtungsmitteln, insbesondere bei dem am oberen Ventilteller eines Doppelsitzventils gemäß dem Stand der Technik wirkt eine axial auf den Ventilkörper wirkende Dichtkraft ebenfalls axial zwischen Ventilsitz und zugehörigem Dichtungsmittel. Nach längeren Geschlossenstellung des Ventils ist aufgrund des Haftens zwischen den elastomeren Dichtungsmitteln und den Dichtungsflächen aus Metall zum Öffnen des Ventils eine Losreißkraft erforderlich. Da diese Losreißkraft ein Vielfaches der vorgespannten Sollwertfederkraft eines Reglers betragen kann und zum Öffnen keine zusätzliche Hilfsenergie zur Verfügung steht, kann das Doppelsitzventil nicht mehr geöffnet werden. In einer vorteilhaften Weiterbildung der obigen Ausführungsform der Erfindung ist der Außendurchmesser $d_{DO}$ des oberen Dichtungsmittels größer als das 1,1-fache des Außendurchmessers $d_{TO}$ des oberen Ventiltellers und der Außendurchmesser $d_{DU}$ des unteren Dichtungsmittels größer als das 1,1-fache des Außendurchmessers $d_{TU}$ des unteren Ventiltellers. In dieser Ausführungsform wirkt eine auf den Ventilkörper wirkende axiale Kraft nicht nur in axialer Richtung zwischen Dichtungsmittel und Ventilsitz, sondern führt zu einer Verbiegung und gegebenenfalls einer radialen Verlagerung der Dichtungsmittel nach innen. Diese in der geschlossenen Stellung des Doppelsitzventils auf die Dichtungsmittel wirkenden Biegemomente können beim Öffnen des Doppelsitzventiles in eine axiale Kraft nach oben umgesetzt werden. Die Kraft eines Haftens zwischen den Dichtungsmitteln und den Dichtungsflächen kann so deutlich verringert werden.

Eine besonders bevorzugte Weiterbildung der obigen Ausführungsform der Erfindung kennzeichnet sich dadurch, daß in der geschlossenen Stellung des Doppelsitzventils die wirksamen Abdichtungsflächen des oberen und unteren Ventiltellers gleich sind. Dann heben sich die aufgrund eines im Ventilraum herrschenden Drucks auf die wirksamen Abdichtungsflächen der beiden Ventilteller wirkenden axialen Kräfte gerade auf. In diesem Fall ist nur eine geringe zusätzliche Kraft erforderlich, um das Ventil als Durchflußbegrenzer in seiner geschlossenen Stellung zu halten. Wird das Doppelsitzventil insbesondere als empfindliches Stellglied eines Reglers verwendet, so ist gerade dieser exakte Kraftausgleich gefordert.

Vorteilhafterweise sind die Umfangsflächen der Dichtungsmittel kegelförmig ausgebildet, um das Hindurchführen bzw. Hindurchdrücken der Dichtungsmittel durch die Ventilöffnung bzw. durch beide Ventilöffnungen zu erleichtern.

Um die zwischen dem Ventilsitz und dem Dichtungsmittel wirkenden Haftkräfte gering zu halten, wird vorgeschlagen, zwischen dem Ventilsitz und den Dichtungsmitteln eine Trennschicht auszubilden. Diese Trennschicht kann durch eine Oberflächenbehandlung der Dichtkanten oder -flächen ausgebildet sein oder dadurch, daß ein Gleitmittel, vorzugsweise Graphit- oder Talkumpuder, auf die Dichtkanten oder -flächen und/oder auf die Dichtungsmittel aufgebracht wird.

Die Erfindung wird in folgendem anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebigen Kombinationen Anwendung finden.

Es zeigen:

Fig. 1 ein schematisches Schnittbild durch das erfindungsgemäße Mehrfachstellgerät;

Fig. 2 eine schematische Darstellung eines Gasgebläsebrenners mit druckseitiger Luftklappe;

Fig. 3 einen Schnitt der durch den erfindungsgemäßen einstellbaren Verbundregler mit Teilschnitt durch die Gasarmatur;

Fig. 4 wie Fig. 3, aber mit Vorrichtung zur Nullpunktsverstellung der Waagearme;

Fig. 5a einen schematischen axialen Längsschnitt einer ersten Ausführungsform eines besonders vorteilhaften Doppelsitzventils;

Fig. 5b eine axiale Längsschnitthälfte einer zweiten Ausführungsform eines vorteilhaften Doppelsitzventils; und

Fig. 5c eine axiale Längsschnitthälfte eines bekannten Doppelsitzventiles.

Grundsätzlich besteht bei jeder offenen Verbrennung zwischen dem jeweiligen Brenngas und der Verbrennungsluft ein bestimmtes Massenverhältnis, um das zündfähige Gemisch zu bilden und aufrechtzuerhalten. Bei atmosphärischen Brennern wird die Gemischbildung ohne Zuhilfenahme fremder Energien gesteuert, indem der aus einer Düse austretende Gasstrahl dadurch geändert wird, daß der Vordruck des Gases je nach Leistungsanforderung angehoben oder abgesenkt wird. Die Energie des ausströmenden Gasstrahls reißt die erforderliche Umgebungsluft mit und vermischt sich mit ihr zu einem zündfähigen und brennbaren Gemisch.

Der Vorgang der Gemischbildung hängt von den geometrischen Verhältnissen am Düsen- und Mischkopfbereich des Brenners ab und läßt ohne zusätzliche Maßnahmen keine verbessernden Eingriffe in die Gemischbildung zu. Wegen ihres einfachen Aufbaus sind diese Brennertypen weit verbreitet und ermöglichen über einen weiten Bereich eine Leistungsanpassung an einen schwankenden Wärmebedarf. Der hier vorliegende Gas-Luft-Verbund ist ein die Strömungsmechanik konsequent ausnutzender ungeregelter Verbund.

Im Gegensatz hierzu setzen Gasgebläsebrenner Fremdenergie ein, um die Verbrennungsluft exakt steuern bzw. zumessen zu können und um mit Hilfe der so erzeugten Druckluft die Durchmischung von Brenngas und dem der Verbrennungsluft angehörenden Sauerstoff wesentlich zu verbessern. Die Möglichkeit, beide Verbrennungspartner getrennt zumessen zu können, erlaubt es, sich den Forderungen an eine schadstoffarme Verbrennung in hohem Maße anpassen zu können. Dies geschieht bei den einstufig arbeitenden Gebläsebrennern durch eine auf einen Betriebspunkt angepaßte Brennereinstellung und bei zweistufig betriebenen Gebläsebrennern durch eine Brennereinstellung für schadstoffarme Verbrennung während des Groß- oder Kleinlastbetriebes.

Der einstufige Gebläsebrenner paßt sich dem unterschiedlichen Wärmebedarf durch intermittierenden Ein-Aus-Betrieb an. Der zweistufige Gebläsebrenner benötigt den Ein-Aus-Betrieb seltener, da er über eine zweite Leistungsstufe verfügt und ist deshalb bezüglich seiner Wirtschaftlichkeit "eine Stufe" besser. Jede eingesparte Regelabschaltung verbessert den Kesselwirkungsgrad und verringert die Schadstoffbelastung. Das Ziel ist deshalb ein Wärmeerzeuger, der sich dem unterschiedlichen Wärmebedarf mit entsprechender Brennerleistung anpassen kann. Diese "modulierend" genannte Betriebsweise fordert für jeden Betriebspunkt im Leistungsbereich des Brenners die zur Verfügungstellung des optimalen Gemisches, wofür es bislang zwei unterschiedliche Zumeßsysteme gibt, nämlich den mechanischen und den pneumatischen Verbund.

Dabei stellt der mechanische Verbund eine reine Steuerung der Durchflußquerschnitte für die Luft- und Gasmenge dar, wobei die Verringerung des Luftklappenquerschnittes auch eine Verringerung des Querschnittes an der Gasdrossel zur Folge hat. Mit Hilfe von zusätzlichen kinematischen Hebeleingriffen können in jedem Leistungsbereich für jedes Brenngas Anpassungen an das Gas-Luft-Verhältnis vorgenommen werden, was das Einstellen derartiger Verbunde zu einer komplizierten Arbeit für einen hochspezialisierten Fachmann werden läßt.

Als Nachteil des mechanischen Verbundes kann das Fehlen einer Regelung und die Kompensation des Feuerraumdruckes betrachtet werden, was hingegen beim pneumatischen Verbund ohne besonderen Aufwand von der Armatur selbst übernommen wird. Beim pneumatischen Verbund sind es die aus der Pneumatik bekannten Größen des statischen Druckes und des Differenzdruckes, die zur Steuerung und Regelung verwendet werden und die diesem Verbund seinen Namen gaben.

Gebläsebrenner mit pneumatischem Glas-Luft-Verbund

Das Ziel einer Verbundregelung besteht darin, die Massenströme der Verbrennungsluft - mit definiertem Sauerstoffanteil - und des Brenngases - mit definierter Zusammensetzung und entsprechendem Heizwert - in einem festen Verhältnis einander zuzuordnen, wenn die Brennerleistung im vorgegebenen Leistungsbereich variiert. Die Verbrennungsgüte, gemessen an der Schadstoffarmut der Abgase ist das Maß für die Zuordnung der beiden Massenströme.

Da der Gebläseluftdruck der Verbrennungsluft die Führungsgröße darstellt, handelt es sich beim pneumatischen Verbund um eine "verbrennungsluftdruckabhängige Regelung".

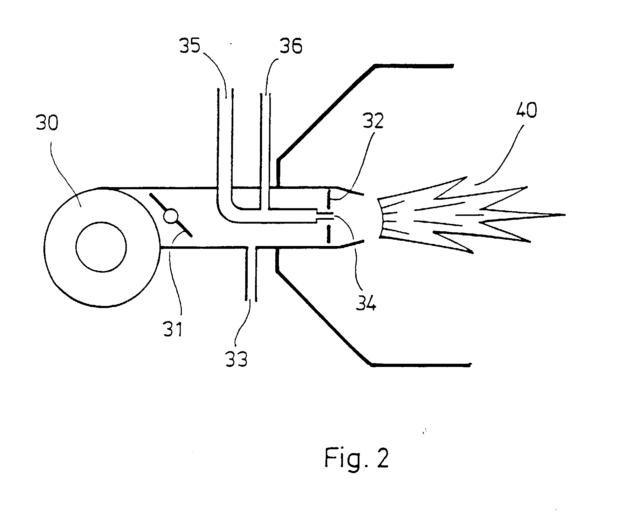

Beim Gasgebläsebrenner saugt ein in Fig. 2 schematisch dargestelltes Radialgebläse 30 die Umgebungsluft an und drückt die verdichtete Luft über eine Luftklappe 31 durch einen Strömungskanal in den Feuerraum 40 des Kessels. Die durchflußbestimmende Engstelle bildet im Flammrohr die Stauscheibe 32 aus, die durch besondere Gestaltung für eine intensive Durchmischung der Luft mit dem Brenngas sorgt. Bei nicht drehzahlgeregelten Gebläsen stellt eine motorbetriebene, auf der Ansaug- oder Druckseite des Gebläses angeordnete Luftklappe die erforderliche Luftmenge ein.

Das Gebläse 30 hat ausschließlich die Aufgabe, die Verbrennungsluft in ausreichender Menge bereitzustellen. Der momentane Volumenstrom bildet sich im Strömungsabschnitt vor der Stauscheibe 32 durch einen statischen Druckanteil ab, der als repräsentative Meßgröße am Abgriff 33 für den Luftdruck für die Regelung herangezogen wird.

Die engste Stelle für den Gasstrom bildet nach Fig. 2 die Gasdüse 34, die sich aus mehreren Einzelbohrungen zusammensetzen kann. Das volumenstrombestimmende Druckgefälle wird gebildet durch den in der Gaszufuhr 35 - Abgriff 36 Gasdruck in Fig. 2 - gemessenen statischen Druck in einer glatten Rohrleitung und dem im Feuerraum 40 sich ausbildenden Druck.

Die in beiden Medien enthaltene Druckenergie wird zur Überwindung von Strömungsverlusten sowie zur Gemischbildung und zur Ansteuerung des Verbundreglers eingesetzt.

Bei Einsatz eines pneumatischen Verbundreglers bleiben die Querschnittsflächen der engsten Stellen für Luft und Gas im Brenner unverändert. In der Regel kann der Zweistufenbrenner bis auf die elektrische Ansteuerung voll übernommen werden. Zur Steuerung der Brennerleistung wird - wie vom Zweistufenbrenner her bekannt - die Luftmenge verändert. Dies geschieht durch kontinuierliches Öffnen oder Schließen der Luftklappe oder durch Verändern der Gebläsedrehzahl selbst, was den Gesamtwirkungsgrad des Brenners verbessert.

Der sich ändernde Luftvolumenstrom als Steuergröße bestimmt die ihm zuzuordnende Gasmenge. Hierbei wird der physikalische Effekt genutzt, daß bei unveränderter Strömungskanalgeometrie der gemessene statische Druck an der Rohrinnenwand den aus der Pneumatik bekannten physikalischen Gesetzmäßigkeiten folgt. Die Änderung des statischen Gebläsedruckes dient als Führungsgröße für den pneumatischen Verhältnisregler zur Anpassung des Gasdruckes in der Gaszuführungsleitung, mit der Maßgabe, daß ein voreingestelltes, in seiner Verbrennung schadstoffarmes Mischungsverhältnis von Gas zu Luft im vorgegebenen Leistungsbereich des Brenners erhalten bleibt.

Eigenschaften des pneumatischen Verbundes

Der pneumatische Verbund stellt, wie nachfolgend gezeigt wird, einen echten Regelkreis dar. Die einzige Einschränkung bezüglich der zu lösenden Aufgabe der Zuordnung von Massenströmen liegt darin, daß von den hierfür zu berücksichtigenden physikalischen Größen lediglich die statischen Druckkomponenten der Gebläsedruckluft und des Brenngases verwendet werden. Diese Drücke werden in einem Momentenvergleicher bzw. einem Kräftevergleicher so gegeneinandergeschaltet, daß das Momenten- oder Kräftegleichgewicht den ausgeregelten, quasistatischen Zustand darstellt, in dem das Gemisch den hygienischen Verbrennungs-Bedingungen in jedem Leistungspunkt entspricht.

Die beiden statischen Drücke werden auf Membranflächen zu Kräften und an Hebelarmen zu Momenten, die nach Vorgabe der Konstruktion entweder Kräfte- oder Momentengleichgewichtsbedingungen zu erfüllen haben.

Die möglichst nahe vor den jeweils engsten Düsenquerschnitten zu erfassenden statischen Drücke stellen eine brauchbare und kostengünstige technische Lösung bezüglich der zu lösenden Aufgabe dar.

Der Einbau von zusätzlichen Blenden oder Düsen in die "Meßleitungen" für Luft und Gas würde zwar den Vorteil einer dichteabhängigen Meßwerteerfassung zur Bestimmung des jeweiligen Massenstromes bringen, aber gleichzeitig den Brenner und die Verbundarmatur für Heizungsanlagen verteuern ohne einen entsprechenden Zugewinn an Genauigkeit.

Der nachfolgend beschriebene pneumatische Verbundregler stellt, wie die vielfältigen Erfahrungen zeigen, ein sehr effizientes System dar, den feuerungstechnischen Wirkungsgrad und den Jahresnutzungsgrad eines Wärmeerzeugers zu verbessern und seine Inbetriebnahme wesentlich zu erleichtern. Eine werksseitige Voreinstellung des Brenners und des Verbundreglers erleichtert diese Aufgabe. Wechselnde Feuerraumdrücke werden vom Verbundregler so berücksichtigt, daß sich das Verbrennungsergebnis nicht ändert, was sich besonders im kleinen Leistungsbereich sehr vorteilhaft auf die Schadstoffzusammensetzung auswirkt. Die Aufschaltung des Feuerraumdruckes ermöglicht sowohl für das Gas als auch für die Luft eine Druckdifferenzaufschaltung auf den Verbundregler, wodurch das Regeln von Massenströmen ermöglicht wird, was diese Armaturen in besonderer Weise auszeichnet.

Aufbau des einstellbaren Verbundreglers in einem Mehrfachstellglied

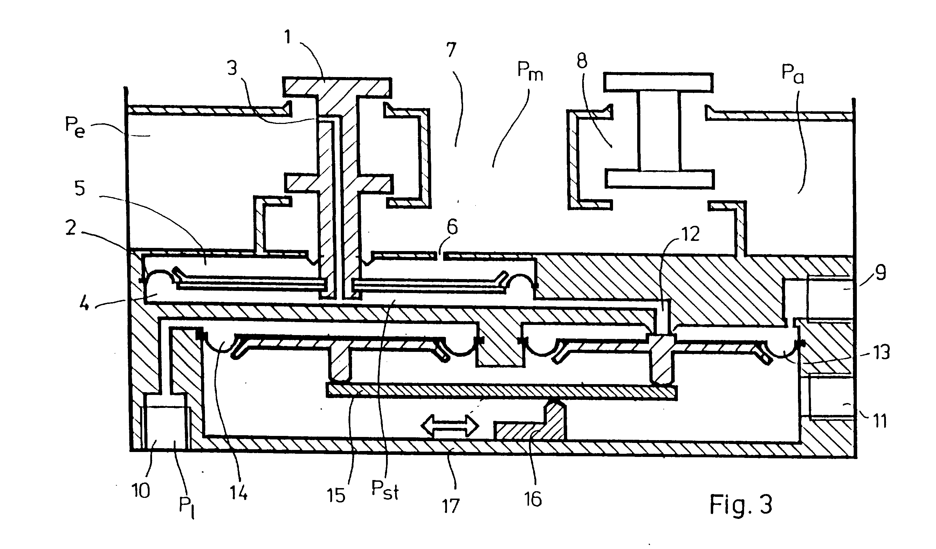

Der Verbundregler ist getrennter oder integrierter Bestandteil einer Gas-Sicherheits-Armatur mit zwei A-Ventilen und einem Servoregler, dessen Stellglied gleich sein kann mit dem Stellglied eines der beiden Ventile. Eine prinzipielle Darstellung mit dem Servoregler am Armatureneingang ohne Magnetantriebe zeigt Fig. 3. Basis bildet die Gasstraßenanordnung der GasMultiBloc-Baureihe. Der Verbundregler ist eine Funktionserweiterung dieser bekannten Mehrfachstellglieder. Im folgenden soll der geregelte Servoantrieb im einzelnen erläutert werden.

Jeder Servoantrieb benötigt, um funktionieren zu können, Energie. Kann diese Energie aus bereits vorhandener, anstehender Energie abgezweigt werden, wird von Hilfsenergie gesprochen. Da in der Regel der Gaseingangsdruck der größte unter den in Frage kommenden Drücken ist, wird er zu Hilfeleistungen herangezogen. Der Gas-Eingangsdruck $p_e$ wird durch die Bohrung 3 im Stellglied 1 in den Raum 4 unter die Steuermembran 2 geführt. Damit steht der höchste vorhandene Druck zur Bewegungssteuerung des kompletten Stellgliedes - einschließlich Steuermembran und Membranteller - zur Verfügung.

Der Raum 5 oberhalb der Steuermembran ist über den Verbindungskanal (Dämpfungsdüse) 6 mit dem Mitteldruckraum 7 zwischen den beiden Sicherheitsventilen verbunden. In diesem Raum herrscht der Ausgangsdruck $p_m$ des Servoreglers.

Ein Servoregler oder vorgesteuerter Regler liegt dann vor, wenn das Kräftegleichgewicht an der Steuer- oder Arbeitsmembran des Hauptreglers ohne Zuhilfenahme einer Sollwertfederkraft oder einer Gewichtskraft ausschließlich durch Druckkräfte und das Eigengewicht des Gesamtstellgliedes hergestellt wird.

Der vom Stellglied 1 freigegebene Durchflußquerschnitt am ersten Ventil stellt für das Gas eine mehr oder minder starke Drosselstelle dar, so daß der Mittelraumdruck $p_m$ immer um den Druckverlust an Stellglied 1 kleiner ist als der Eingangsdruck selbst. Bei vorhandener Strömungsgeschwindigkeit liegt immer ein Druckgefälle $(p_e - p_m)$ vor, zumal das am Eingang mit dem Druck $p_e$ einströmende Gas zunächst durch eine Filtermatte 18 aus Fasern geführt wird.

Nach dem Durchströmen des vollständig geöffneten Ventils 8 hat sich der Gasdruck im Gehäuseausgang auf den Ausgangsdruck $p_a$ reduziert. Kurz vor der Gasdüse nach weiteren Druckverlusten in der Gaszuführungsleitung hat sich dieser Druck auf den Brennerdruck $p_{br}$ (Abgriff Gasdruck in Fig. 2) reduziert, der als Meß- und Regelgröße an den Anschluß 9 des Verbundreglers geführt wird. Dieser Brennerdruck wirkt auf die gasseitige Reglermembran 13.

Am Anschluß 10 wird der statische Druck der Verbrennungsluft $p_l$ eingeleitet und an Anschluß 11 der in der Brennkammer herrschende Feuerraumdruck $p_f$. Wird der Brennerdruckanschluß mit großem Querschnitt versehen, so wird der Luftanschluß sehr häufig gedrosselt, um eine dämpfende Wirkung zu erzielen.

Der im Steuerdruckraum 4 unter der Steuermembran herrschende Druck $p_{st}$ wird durch das Abströmventil 12 in seiner Druckhöhe gesteuert. Das Stellglied des Ventils 12 ist hier mit der Reglermembran für den Brennerdruck identisch. Der Steuerdruck kann jeden Wert zwischen dem höchsten Eingangsdruck und dem niedrigsten Brennerdruck annehmen. Dazu ist es erforderlich, daß der Abströmquerschnitt an Ventil 12 größer ausgelegt ist als der Zuströmquerschnitt der Bohrung 3.

Die momentane Kräftebilanz an der Steuermembran zwischen den beiden Drücken $p_{st}$ und $p_m$ und dem Eigengewicht des kompletten Stellgliedes mit Steuermembran entscheidet, ob das Stellglied eine öffnende oder schließende Bewegung macht oder in seiner Stellung schwebend verharrt.

Im eingeregelten Gleichgewichtszustand am Waagebalken strömt durch das Ventil 12 ein vom Druckgefälle $(p_e - p_{br})$ abhängiger Steuervolumenstrom, der sich im Volumen über der Gasmembran 13 mit dem dort herrschenden Brennerdruck zu einem Mischdruck ausbildet.

Soll dieser Gleichgewichtszustand, der einem bestimmten Brennerdruck $p_{br}$ und einem definierten Verbrennungsluftdruck $p_l$ entspricht, geändert werden, so muß der Steuervolumenstrom verringert oder angehoben werden. Dies geschieht durch eine Gleichgewichtsänderung am Waagebalken 15, wodurch das Ventil 12 mehr geöffnet oder geschlossen wird.

Die beiden flächengleichen Membranen 13 und 14 sind über den Waagebalken 15, der auf einem verschiebbaren Schneidenlager 16 aufliegt, kraftschlüßig miteinander gekoppelt. Die Auflagerverstellung 17 erlaubt die Einstellung eines Hebelarmverhältnisses von 0,75:1 bis 5:1, womit die in der Praxis vorkommenden Gas/Luftdruckverhältnisse abgedeckt werden können. In der Regel sitzt die Luftmembran am längeren Hebelarm, da mit wenigen Ausnahmen der Verbrennungsluftdruck immer kleiner ist als der Gasbrennerdruck.

Wirkungsweise des Verbundreglers

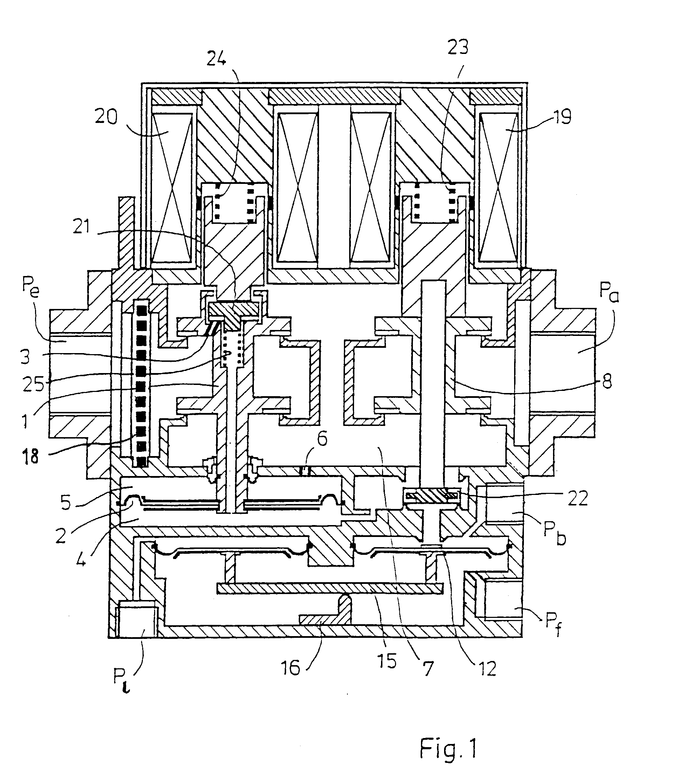

Das Stellglied 1 nach Fig. 3 ist in Geschlossenstellung ein Sicherheitsabsperrventil mit gleichzeitigem Abschluß von zwei Ventilsitzen. Die Schließkraft wird von einer nicht dargestellten Schließfeder über einen Magnetanker aufgebracht. Der Magnetanker bildet für das Stellglied auch die zweite radiale Führung des Reglerstellglieds (siehe Fig. 1).

Wird der Magnetanker gegen die Schließfederkraft in die Magnetspule hineingezogen, so ist das Stellglied 1 mit Steuermembran 2 nur noch eigengewichtsbelastet. Gleichzeitig mit dem Entlasten des Stellgliedes wird der Zuströmquerschnitt der Bohrung 3 freigegeben, so daß der Eingangsdruckraum mit dem Steuerdruckraum 4 verbunden wird. Wegen des vorhandenen Druckgefälles strömt Gas in den Steuerdruckraum ein.

Das Ventil 8, ebenfalls als Doppelsitzventil ausgebildet, ist mit einem Magnetanker fest verbunden, und wird magnetisch gemeinsam mit dem Anker von Stellglied 1 geöffnet.

Infolge der Vorbelüftungszeit läuft das Brennergebläse bereits, so daß auf der Luftmembran 14 der Gebläseluftdruck ansteht, der das Ventil 12 geschlossen hält. Der Gebläsedruck wirkt auch über das Flammrohr rückwärts in die Gaszufuhrleitung und steht in abgeschwächter Form auch auf der Gasmembran 13 an. Bei Hebelarmverhältnissen > 1:1 überwiegt das schließende Moment auf Ventil 12, so daß sich im Raum 4 ein Steuerdruck aufbauen kann, der das Eigengewicht des Hauptreglers 1 und 2 überwindet und die beiden Ventilsitze öffnet.

Dabei baut sich im Raum 5 über der Steuermembran ein Gegendruck auf, der durch den Staudruck des verdichteten Gases an der Dämpfungsdüse 6 entweichen kann. Durch Bilden dieses zeitlich begrenzten Gaspolsters wird ein überschwingendes Öffnen des Stellgliedes 1 vermieden.

Der sich durch das einströmende Gas im Mittelraum ausbildende Staudruck $p_m$ beaufschlagt nunmehr in Raum 5 die Gegenfläche der Steuermembran und sorgt für die entsprechende Einspannkraft der Steuermembran. Wesentlichen Anteil an der Festlegung des dynamischen Verhaltens des Stellgliedes 1 hat dabei die Dimensionierung der Zuströmdüse 3 und der Dämpfungsdüse 6.

Im eingeregelten Gleichgewichtszustand steht die nach oben wirkende Kraft des Steuerdrucks im Gleichgewicht mit der Mittelraumdruckkraft plus Eigengewicht des Regelorgans nach unten. Bei entsprechender Ausgestaltung des Doppelsitzventils sind die Kräfte an den beiden Ventiltellern bezüglich Eingangsdruck und jedem sich einstellenden Mittelraumdruck ausgeglichen. Es liegt somit ein sehr feinfühliges Steuer- und Regelsystem vor, das auf kleinste Druckabweichungen reagiert.

Führt der aufgeschaltete Brennerdruck zu einem Öffnen des Ventils 12, so verringert sich der Steuerdruck und das Stellglied 1 beginnt den freien Ventilquerschnitt zu schließen. Die Folge ist eine Reduzierung des Gasvolumenstroms. Dadurch wird der Staudruck an der Gasdüse des Brenners verringert und das das Ventil 12 öffnende Moment der Gasmembran 13 am Waagebalken 15 verringert sich ebenfalls. Der Steuervolumenstrom wird solange reduziert, bis sich ein neuer quasi stabiler Gleichgewichtszustand eingestellt hat.

Fällt der Luftdruck plötzlich weg, so bricht das Momentengleichgewicht zusammen. Ventil 12 öffnet voll, wodurch der Steuerdruck auf die Höhe des Brennerdruckes zusammenbricht. Das Eigengewicht und der anstehende Mittelraumdruck, der immer größer ist als der Brennerdruck, bilden die Schließkraft für das Stellglied 1, das daraufhin schnell schließt.

Fällt dagegen der Brennerdruck auf Null, so schließt Ventil 12 ohne Gegenmoment und der Steuerdruck steigt auf sein Maximum an. Das Stellglied 1 öffnet voll. Deshalb ist dem Anschluß der Impulsleitung für das Gas und deren Schutz vor Beschädigung ganz besondere Beachtung bei der Installation zu widmen.

Wie oben bereits angeführt, ist der Verbrennungsluftdruck die Führungsgröße für den Verbundregler. Mit dem bisher erläuterten Funktionsprinzip ist nachvollziehbar zu erkennen, daß ein ansteigender Verbrennungsluftdruck $p_l$ das Ventil 12 in schließender und ein sinkender Verbrennungsluftdruck in öffnender Richtung betätigt. Dadurch ist konstruktiv vorgegeben und gewährleistet, daß eine Verstellung der Luftklappe im Gebläsebrenner automatisch eine Nachführung des Gasdruckes und damit der Gasmenge zur Folge hat. Damit ist die funktionale Auslegung des Verbundreglers prinzipiell gelöst.

Die Kombination des Verbundreglers mit der Gasarmatur bedarf noch einiger grundsätzlicher Vorkehrungen, um die sicherheitstechnischen Anforderungen zu erfüllen. In Fig. 1 ist eine vollständige Verbund-Armatur im Schnitt dargestellt, aus dem die noch zu erklärenden, restlichen Zusammenhänge hervorgehen. Hierbei spielt das Schnellschlußverhalten eine wichtige Rolle.

Bei der Regelabschaltung der Armatur werden die beiden Magnetspulen 19 und 20 stromlos gemacht. Die beiden Schließfedern 23 und 24 in Fig. 1 schließen die beiden Doppelsitzventile. Im Stellglied 1 ist der Ventilteller eines 2/2-Wegeventils 21 eingebaut, das durch den Anker betätigt, die Zuströmbohrung 3 absperrt, so daß die Zuleitung zum Steuerdruckraum unterbunden ist. Zum Schließen des Ventils 21 muß die Gegenkraft der Feder 23 überwunden werden, was das Vorhandensein einer entsprechend großen Gegenkraft an der Steuermembran voraussetzt. Das von den an der Steuermembran herrschenden Drücken abhängige Schließzeitverhalten muß auf eine sichere Art und Weise beherrschbar gemacht werden. Hierzu bietet sich das ausgangsseitige Doppelsitzventil 8 an, das unabhängig von verzögernden Kräften am schnellsten schließt.

Durch das Schließen des ausgangsseitigen Sicherheitsventils bricht der Brennerdruck fast schlagartig zusammen. Der Gebläseauslauf erzeugt aber immer noch einen Luftdruck, der über den Waagebalken 15 das Steuerventil 12 schließt. Der Steuerdruck würde, solange das Ventil 21 noch geöffnet ist, auf sein Maximum ansteigen und dem Schließen des Stellgliedes 1 die höchste Kraft entgegenstellen, was der Forderung nach Schnellschlußverhalten eines Sicherheitsventils nicht entsprechen würde.

Um diese Forderung zu erfüllen, wurde dem ausgangsseitigen Sicherheitsventil 8 eine Zusatzfunktion erteilt: Die Betätigung des 3/2-Wegeventils 22. Bei geschlossenem Ventil 8 sperrt der Ventilteller 22 die Verbindung zwischen dem Ventil 12 und dem Steuerdruckraum 4 ab und öffnet gleichzeitig die Verbindung zwischen dem Mitteldruckraum 7 und dem Steuerdruckraum 4. Damit ist ein schneller Druckausgleich zwischen diesen beiden Räumen hergestellt. Dadurch wird auch Raum 5 über der Steuermembran 2 durch die Dämpfungsdüse 6 auf ein gleiches, gemeinsames Druckniveau gebracht.

Dieser interne Druckausgleich schafft nicht nur vorteilhafte Bedingungen bei der Regelabschaltung und beim Startvorgang nach dem Gasfreigabesignal an die beiden Magnetspulen, sondern läßt auch die auf Druckerhöhung ausgelegte Ventildichtheitsprüfung ohne inneren Verspannungsaufbau zu. Auch jede durch die Magnet temperaturen nach der Regelabschaltung mögliche Gaserwärmung und damit Druckerhöhung im Mitteldruckraum 7 wird durch diese Ventil-Anordnung an der Steuermembran verhindert. Gleiches gilt auch bei Abkühlung, d.h. bei möglicher Unterdruckausbildung im Mitteldruckraum 7.

Auch ist damit die Forderung, daß die Steuerleitungen durch zwei A-Ventile abgesperrt werden und daß in jedem Steuerstrang zwei Ventile in Reihe geschaltet sind, durch die Ventile 21 und 22 erfüllt.

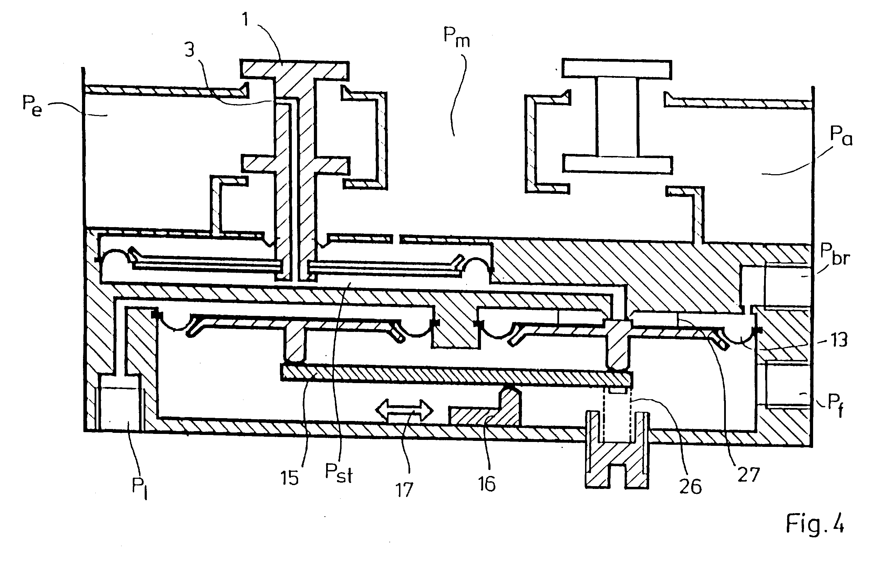

In Fig. 4 ist nochmals eine Schnittansicht wie in Fig. 3 gezeigt, bei der aber unterhalb der Regelmembran 13 eine Einrichtung zur Nullpunktsverstellung des Waagebalken 15 vorgesehen ist. An der Gasregelmembran 13 sind zwei gegeneinander wirkende Federn 26 und 27 eingebaut, die ein Austarieren der Momente am Waagebalken ermöglichen und damit eine Kennlinien-Parallelverschiebung in Richtung auf Gas- oder Luftüberschuß gestatten.

Besonders vorteilhafte Ausführungen der beim erfindungsgemäßen Mehrfachstellgerät verwendeten Doppelsitzventile sind im folgenden beschrieben:

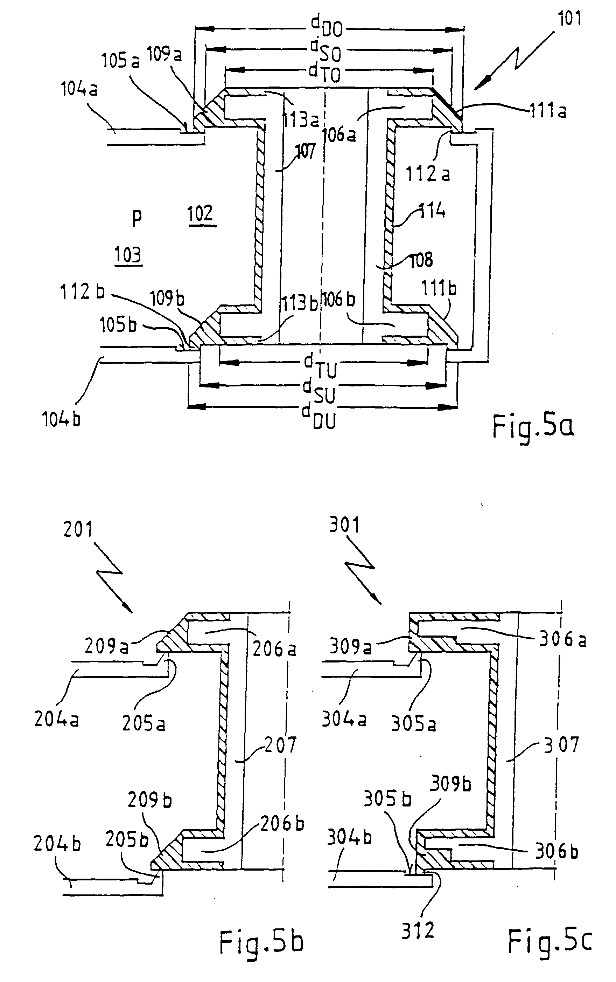

In Figur 5a ist mit 101 ein Doppelsitzventil bezeichnet, das sich in seiner geschlossenen Stellung befindet. Das Doppelsitzventil 101 weist eine Ventilkammer 102 mit einem Ventileingang 103 und mit zwei Ventilsitzen 104a, 104b auf. Der lichte Innendurchmesser $d_{SO}$ des oberen Ventilsitzes 104a bildet die obere Ventilöffnung, der lichte Innendurchmesser $d_{SU}$ des unteren Ventilsitzes 104b die untere Ventilöffnung des Doppelsitzventiles 101. Die beiden Ventilsitze 104a, 104b bzw. die beiden Ventilöffnungen verlaufen parallel zueinander und sind auf ihrer Oberseite derart gestuft, daß jeweils eine flache oder leicht geneigte Kegelfläche als Dichtfläche 105a, 105b ausgebildet ist. In den in den Figuren 5a und 5b gezeigten Ausführungsformen der Erfindung entspricht der lichte Innendurchmesser $d_{SO}$ des oberen Ventilsitzes 104a dem lichten Innendurchmesser $d_{SU}$ des unteren Ventilsitzes 104b.

Mit den beiden Ventilsitzen 104a, 104b wirken zwei Ventilteller 106a, 106b eines Ventilkörpers 107 zusammen. Der Ventilkörper 107 ist einstückig und rotationssymmetrisch ausgebildet. Die beiden Ventilteller 106a, 106b sind an den beiden Stirnseiten des Ventilkörpers 107 ausgebildet, dessen mittlerer axialer Abschnitt 108 gegenüber den beiden Ventiltellern 106a, 106b nach innen zurückgestuft ist. Der Außendurchmesser $d_{TO}$ des oberen Ventiltellers 106a ist gleich dem Außendurchmesser $d_{TU}$ des unteren Ventiltellers 106b, wohingegen dieser Außendurchmesser $d_{TO}$, $d_{TU}$ der Ventilteller 106a, 106b kleiner als der lichte Innendurchmesser $d_{SO}$, $d_{SU}$ der Ventilsitze 104a, 104b ist.

Von den radialen Umfangsflächen und von den Unterseiten der Ventilteller 106a, 106b erstreckt sich in radialer Richtung nach außen jeweils ein elastomeres Dichtungsmittel 109a, 109b. Der Außendurchmesser $d_{DO}$ des oberen Dichtungsmittels 109a ist größer als der lichte Innendurchmesser $d_{SO}$ des oberen Ventilsitzes 104a und der Außendurchmesser $d_{DU}$ des unteren Dichtungsmittels 109b größer als der lichte Innendurchmesser $d_{SU}$ des unteren Ventilsitzes 104b. Auf ihrem oberen axialen Abschnitt weisen die Dichtungsmittel 109a, 109b jeweils eine kegelförmige, sich nach oben verjüngende Dichtungsfläche 111a, 111b auf, während sie im Bereich der Dichtflächen 105a, 105b jeweils einen nach unten ragenden umlaufenden Dichtungswulst 112a, 112b aufweisen. In der geschlossenen Stellung des Doppelsitzventiles 101 wirken die Dichtungswulste 112a, 112b mit den Dichtflächen 105a, 105b der Ventilsitze 104a, 104b zusammen. Auch auf dem mittleren Abschnitt 108 des Ventilkörpers 107 und auf einem Teil der Stirnflächen 113a, 113b kann der Ventilkörper mit einem Dichtungsmittel 114 versehen sein.

Das in Figur 5b mit 201 bezeichnete Doppelsitzventil unterscheidet sich von dem Doppelsitzventil 101 der Figur 5a dadurch, daß die Ventilsitze 204a, 204b jeweils mit einer nach oben weisenden schneidenförmigen Dichtungskante 205a, 105b ausgebildet sind und daß die sich radial nach außen erstreckenden Dichtungsmittel 209a, 209b keinen Dichtungswulst, sondern eine flache Dichtfläche aufweisen.

Die Abmessungen der in den Figuren 5a und 5b gezeigten Ausführungsformen lassen sich in der folgenden Ungleichungen zusammenfassen:

$$d_{D0} = d_{DU} > d_{SO} = d_{SU} > d_{TO} = d_{TU}.$$

Dabei kann der Durchmesser $d_{DO}$ der unteren Dichtungsmittel 109b, 209b bis um denjenigen Betrag größer als der lichte Innendurchmesser $d_{SO}$ des oberen Ventilsitzes 104a, 204a gewählt werden, um den sich das Dichtungsmittel 109b, 209b aufgrund seiner Elastizität in radialer Richtung zusammenpressen oder zur Seite biegen läßt.

Beim Einbau des Ventilkörpers 107, 207 des Doppelsitzventils 101, 201 wird der untere Ventilteller 104b, 204b, vorzugsweise schräg unter einem geeigneten Anstellwinkel, an die obere Ventilöffnung angesetzt und unter Zusammenpressen und Umbiegen der unteren Dichtungsmittel 109b, 209b durch die obere Ventilöffnung hindurchgewunden.

Um die Unterschiede und Vorteile der erfindungsgemäßen Ausführungsformen darzustellen, wird zunächst das in Fig. 5c gezeigte herkömmliche Doppelsitzventil beschrieben. Zur Beschreibung der Fig. 5c werden im folgenden die in Fig. 5a definierten und durch einen nachgefügten Strich ergänzten Durchmesserbezeichnungen verwendet. Bei dem Doppelsitzventil sind der obere Ventilsitz 304a mit einer schneidenförmigen Dichtungskante 305a und der untere Ventilsitz 304b mit einer ebenen Dichtungsfläche 305b ausgebildet. Der lichte Innendurchmesser $d'_{SO}$ ist größer als der lichte Innendurchmesser $d'_{SU}$ des unteren Ventilsitzes 304b. Der Außendurchmesser $d'_{TO}$ des oberen Ventiltellers 306a des Ventilkörpers 307 ist größer als der lichte Innendurchmesser $d'_{SO}$ des oberen Ventilsitzes 304a, der seinerseits größer als der Außendurchmesser $d'_{TU}$ des unteren Ventiltellers 306b ist. Von der Unterseite der Ventilteller 306a, 306b erstrecken sich elastomere Dichtungsmittel 309a, 309b nach unten, wobei das untere Dichtungsmittel 309b mit einem nach unten ragenden Dichtungswulst 312 versehen ist, der mit der Dichtungsfläche 305b des unteren Ventilsitzes 304b zusammenwirkt.

Der untere Ventilteller 306b des herkömmlichen Ventilkörpers 307 wird durch die Öffnung des oberen Ventilsitzes 304a hindurchgeführt, wobei der mittlere Außendurchmesser $d'_{DU}$ des unteren Dichtungsmittels 309b kleiner als der lichte Innendurchmesser $d_{SO}$ des oberen Ventilsitzes 304a gewählt ist, um den unteren Ventilteller 306b zusammen mit dem Dichtungsmittel 309b durch die obere Ventilöffnung hindurchführen zu können.

Herrscht in der geschlossenen Stellung des bekannten Doppelsitzventiles 301 in der Ventilkammer 302 ein Druck p eines Fluids, so wirkt auf die Dichtfläche des oberen Ventiltellers 306a eine Kraft axial nach oben und auf die Dichtfläche des unteren Ventiltellers 306b eine Kraft axial nach unten. Für viele Anwendungen wird gefordert, daß die resultierende, auf den Ventilkörper 107 wirkende axiale Kraft verschwindet. Dazu muß der Innendurchmesser $d'_{SO}$ des oberen Ventilsitzes 304a gleich dem mittleren Außendurchmesser $d'_{DU}$ des unteren Dichtungsmittels 309b sein. Dies ist bei dem bekannten Doppelsitzventil 301 jedoch nicht exakt möglich. Vielmehr ergibt sich dann in der geschlossenen Stellung des Doppelsitzventils eine nicht mehr vernachlässigbare axiale Kraftkomponente nach oben, die der Schließkraft, beispielsweise einer Schließfeder, und somit der Dichtwirkung des Doppelsitzventils entgegenwirkt. Um dennoch einen Kraftausgleich zu erzielen, wird bei dem oberen Ventilsitz 304a eine schneidenförmige Dichtungskante 305a, die zu einer sehr kleinen Verformung des Dichtungsmittels 309a führt, und bei dem unteren Ventilsitz 304b eine Dichtfläche 305b verwendet, die zu einer größeren Verformung führt, so daß dennoch eine gleichmäßige Aufteilung der Dichtkraft in der geschlossenen Stellung des Doppelsitzventils erreicht wird. Dies ist jedoch nur über sehr kleine Toleranzfelder möglich.

Nach einer längeren Geschlossenstellung des Ventils aufgrund des Haftens zwischen den elastomeren Dichtungsmitteln und den Dichtungsflächen aus Metall ist zum Öffnen des Ventils eine Losreißkraft erforderlich, die beispielsweise bei einer Ventilreglerkombination ein Vielfaches der vorgespannten, minimalen Sollwertfederkraft ist, so daß der Regler nicht mehr öffnet. Außer der Sollwertfederkraft zum Öffnen steht aber keine zusätzliche Hilfsenergie zur Verfügung, wenn schneidenförmige Ventilsitze verwendet werden. Bei dem Doppelsitzventil 301 gemäß dem Stand der Technik führt eine auf den Ventilkörper 307 wirkende axiale Schließkraft zu einer ebenfalls nur axial wirkenden Kraftkomponente zwischen den Dichtungsmitteln und ihren zugehörigen Dichtungsflächen, wodurch die maximal mögliche Haftkraft zwischen den Dichtungsmitteln und den Dichtflächen wirkt.

Im Gegensatz dazu kann bei den erfindungsgemäßen Ausführungsformen der Figuren 5a und 5b ein exakter Kraftausgleich erzielt werden, wenn die Dichtfläche des oberen Ventiltellers 106a, 206a, die durch den lichten Innendurchmesser $d_{SO}$ des oberen Ventilsitzes 104a, 204a definiert ist, exakt gleich der Dichtfläche des unteren Ventiltellers 106b, 206b gewählt wird, die durch den Durchmesser $d_{DU}$ des unteren Dichtungsmittels 109b, 209b definiert ist.

Da sich die Außendurchmesser $d_{DO}$, $d_{DU}$ der Dichtungsmittel 109a, 109b, 209a, 209b radial nach außen über mindestens das 1,1-fache der Außendurchmesser $d_{TO}$, $d_{TU}$ der Ventilsitze 104a, 104b, 204a, 204b erstrecken, führt eine axial auf den Ventilkörper 107, 207 wirkende Kraft dazu, daß neben einer axialen Komponente auch ein Biegemoment auf die Dichtungsmittel 109, 209 wirkt. Dadurch wird zum einen die zwischen den Dichtungsmitteln 109, 209 und den Dichtungsflächen 105, 205 wirkende Haftkraft nicht nur verringert, sondern beim Öffnen des Ventils wird das Biegemoment auch in eine axiale Öffnungskraft umgesetzt. Die Gefahr des Haftens zwischen den Dichtungsmitteln und den Dichtungsflächen wird deutlich herabgesetzt. Das Biegemoment führt zur Verformung des Elastomers, die beim Entlasten zu einer Rückverformung mit Gleitbewegungen zwischen Elastomer und Metall(Dicht)fläche führt. Diese Relativbewegung überwindet die Haftkräfte.

## Patentansprüche

1. Gas/Luft-Verhältnisdruckregler in einem Mehrfachstellgerät, bei dem die Verbrennungsluft und das Brenngas den statischen Druck $p_l$ bzw. $p_{br}$ aufweisen und der Feuerraumdruck $p_f$ herrscht mit

   a) einem Gasdruckregelventil
   b) einem Sicherheitsventil mit einer federbelasteten Schließstellung,
   c) zwei mechanisch verbundenen Regelmembranen auf die einerseits der Feuerraumdruck $p_f$ eines Verbrennungswärmeerzeugers und andererseits auf die erste Membran der Druck $p_{br}$ und auf die zweite Membran der Druck $p_l$ wirken,

dadurch gekennzeichnet,
daß das Regelventil und das Sicherheitsventil (8) jeweils als Doppelsitzventile ausgebildet sind und zwei Ventilteller aufweisen, die in axialem Abstand an einer jeweiligen Ventilstange angeordnet sind und im geschlossenen Zustand dichtend jeweils auf zwei Ventilsitzen aufsitzen, daß das Regelventil am Eingang des Gasstromes zum Mehrfachstellgerät angeordnet ist und am unteren Ende der Ventilstange einen randseitig mit einer umlaufenden, dichtenden Steuermembran (2) versehenen Membranteller aufweist, der auf seiner Unterseite mit dem Steuerdruck $p_{st}$ und an seiner Oberseite mit einem Mittelraumdruck $p_m$ aus einem Mitteldruckraum (7) beaufschlagt ist, welcher kleiner oder gleich dem Eingangsdruck $p_e$ des zufließenden Gasstromes am Eingang ist, daß der Eingangsdruck $p_e$ des Gasstromes auf einen Steuerdruckraum (4) wirken kann, dessen obere Begrenzung die Unterseite des Membrantellers des Regelventils bildet, daß der Steuerdruckraum (4) über ein von der ersten Regelmembran (13) betätigbares Steuerventil (12) mit dem Brennerdruck $p_{br}$ verbunden ist, und daß ein 3/2-Wegeventil (22) vorgesehen ist, welches so eingerichtet ist, daß es bei geschlossenem Sicherheitsventil (8) die Verbindung zwischen dem Steuerventil (12) und dem Steuerdruckraum (4) absperrt und gleichzeitig eine Verbindung zwischen dem Mitteldruckraum (7) und dem Steuerdruckraum (4) öffnet, oder welches so eingerichtet ist, daß es bei geschlossenem Regelventil die Verbindung zwischen dem Steuerdruckraum (4) und dem Eingang des Gasstromes absperrt und gleichzeitig eine Verbindung zwischen dem Mitteldruckraum (7) und dem Steuerdruckraum (4) öffnet.

2. Mehrfachstellgerät nach Anspruch 1, dadurch gekennzeichnet, daß an der Oberseite des Stellgliedes (1) ein 2/2-Wegeventil (21) vorgesehen ist, das eine Längsbohrung der Ventilstange, die in den Steuerdruckraum (4) mündet, gegenüber dem Eingangsdruck $p_e$ verschließen oder öffnen kann.

3. Mehrfachstellgerät nach Anspruch 1 oder 2, dadurch gekennzeichnet, daß das 3/2-Wegeventil (22) an der Unterseite des Sicherheitsventils (8) vorgesehen ist.

4. Mehrfachstellgerät nach Anspruch 1, dadurch gekennzeichnet, daß das 3/2-Wegeventil an der Oberseite des Stellgliedes (1) vorgesehen ist.

5. Mehrfachstellgerät nach einem der vorhergehenden Ansprüche, dadurch gekennzeichnet, daß zwischen dem Raum (5) oberhalb der Steuermembran (2) und dem Mitteldruckraum (7) eine Dämpfungsdüse (6), zumindest in Form einer Bohrung geringen Durchmessers vorgesehen ist.

6. Mehrfachstellgerät nach einem der vorhergehenden Ansprüche, dadurch gekennzeichnet, daß die Regelmembranen (13, 14) jeweils an ihrer Unterseite mit dem Feuerraumdruck $p_f$ beaufschlagt sind, während an der Oberseite der ersten Regelmembran (13) der Brennerdruck $p_{br}$ und an der Oberseite der zweiten Regelmembran (14) der Verbrennungsluftdruck $p_l$ anliegt.

7. Mehrfachstellgerät nach einem der vorhergehenden Ansprüche, dadurch gekennzeichnet, daß die mechanische Verbindung der beiden Regelmembranen (13, 14) eine Hebelmechanik mit festem Hebelarmverhältnis umfaßt.

8. Mehrfachstellgerät nach einem der Ansprüche 1 bis 6, dadurch gekennzeichnet, daß die mechanische Verbindung der beiden Regelmembranen (13, 14) eine Hebelmechanik mit veränderbarem Hebelarmverhältnis umfaßt.

9. Mehrfachstellgerät nach Anspruch 7 oder 8, dadurch gekennzeichnet, daß die Hebelmechanik einen auf einem insbesondere horizontal verschiebbaren Schneidenlager (16) aufliegenden Waagebalken (15) umfaßt.

10. Mehrfachstellgerät nach Anspruch 9, dadurch gekennzeichnet, daß an einem der beiden Waagearme, vorzugsweise auf der Seite der ersten Regelmembran (13), eine Federvorrichtung (26, 27) zum Austarieren der Momente am Waagebalken (15) und zur Nullpunktverstellung des Momentengleichgewichts der Waage vorgesehen ist.

11. Mehrfachstellgerät nach einem der vorhergehenden Ansprüche, dadurch gekennzeichnet, daß die Vorrichtung zur Überwindung der Schließfederkräfte Elektromagnete mit Magnetspulen (19, 20) und gegen die Federkraft der jeweiligen Schließfeder (23, 24) einziehbaren Ankern sind.

12. Mehrfachstellgerät nach Anspruch 11, dadurch gekennzeichnet, daß die Magnetspulen (19, 20) elektrisch miteinander verbunden, vorzugsweise in Serie geschaltet sind.

13. Mehrfachstellgerät nach Anspruch 12, dadurch gekennzeichnet, daß die Federkräfte der beiden Schließfedern (23, 24) und die beiden Magnetspulen (19, 20) jeweils gleich dimensioniert sind.

14. Mehrfachstellgerät nach einem der vorhergehenden Ansprüche, dadurch gekennzeichnet,

a) daß das Regelventil und/oder das Sicherheitsventil ausgeführt ist mit einem oberen Ventilsitz (104a; 204a) mit einem lichten Innendurchmesser $d_{SO}$ der oberen Ventilöffnung, mit einem darunter angeordneten unteren Ventilsitz (104b; 204b) mit einem lichten Innendurchmesser $d_{SU}$ der unteren Ventilöffnung und mit einem vorzugsweise einstückigen Ventilkörper (107; 207), der einen oberen und einen unteren Ventilteller (106a, 106b; 206a; 206b) aufweist,

b) daß zumindest an der Unterseite der beiden Ventilteller (106a, 106b; 206a, 206b) jeweils ein elastomeres Dichtungsmittel (109a, 109b; 209a, 209b) vorgesehen ist und die Unterseiten der Dichtungsmittel (109a, 109b; 209a, 209b) in der geschlossenen Stellung des Doppelsitzventils (101; 201) auf dem oberen bzw. dem unteren Ventilsitz (104a, 204a; 104b, 204b) mit einer definierten Pressung aufliegen, die den Durchtritt des abzudichtenden Mediums verhindert,

c) daß der Außendurchmesser $d_{TO}$ des oberen Ventiltellers (106a; 206a) und der Außendurchmesser $d_{TU}$ des unteren Ventiltellers (106b; 206b) jeweils kleiner sind als der lichte Innendurchmesser $d_{SO}$ des oberen Ventilsitzes (104a; 204a),

d) daß die elastomeren Dichtungsmittel (109a, 109b; 209a, 209b) sich in radialer Richtung weiter nach außen erstrecken als die beiden Ventilteller (106a, 106b; 206a, 206b) und einen oberen Außendurchmesser $d_{DO}$ bzw. einen unteren Außendurchmesser $d_{DU}$ aufweisen, der jeweils größer als der lichte Innendurchmesser $d_{SO}$ des oberen Ventilsitzes (104a; 204a) bzw. der lichte Innendurchmesser $d_{SU}$ des unteren Ventilsitzes (104b; 204b) ist, und

e) daß der Außendurchmesser $d_{DU}$ des unteren Dichtungsmittels (109b; 209b) größer als der lichte Innendurchmesser $d_{SO}$ des oberen Ventilsitzes (104a; 204a) ist.

15. Mehrfachstellgerät nach Anspruch 14, dadurch gekennzeichnet, daß der Außendurchmesser $d_{DO}$ des oberen Dichtungsmittels (109a; 209a) größer als das 1,1-fache, vorzugsweise größer oder gleich dem 1,5-fachen, des Außendurchmessers $d_{TO}$ des oberen Ventiltellers (106a; 206a) ist und daß der Außendurchmesser $d_{DU}$ des unteren Dichtungsmittels (109b; 209b) größer als das 1,1-fache, vorzugsweise größer oder gleich dem 1,5-fachen, des Außendurchmessers $d_{TU}$ des unteren Ventiltellers (106b; 206b) ist.

16. Mehrfachstellgerät nach Anspruch 14 oder 15, dadurch gekennzeichnet, daß in geschlossener Stellung des Doppelsitzventils (101; 201) die wirksamen Abdichtungsflächen des oberen (106a; 206a) und unteren Ventiltellers (106b; 206b) gleich sind.

## Claims

1. Gas/air-ratio pressure regulator in a multiple regulating apparatus with which the combustion air and the combustion gas have static pressures $p_1$ and $p_{br}$ respectively and the combustion chamber pressure is $p_f$, including

a) a gas pressure regulation valve,

b) a safety valve having a spring loaded closing position,

c) two mechanically connected regulating membranes upon which, and at one side, the combustion room pressure $p_f$ of a combustion heat producer acts and, on the other side, the pressure $p_{br}$ acts on the first membrane and the pressure $p_1$ on the second membrane,

characterized in that
the regulation valve and the safety valve (8) are each configured as double seat valves and have two valve heads which are disposed at an axial separation on respective valve rods and, in a closed state, sealingly seat on two respective valve seats and the regulation valve is disposed at the input of the gas flow to the multiple regulating apparatus and has a membrane head at the lower end of the valve rod at the edge side and having a peripheral sealing control membrane (2) which, on its lower side, is subjected to the control pressure $p_{st}$ and, at its upper side, to the medium cavity pressure $p_m$ coming from the medium pressure cavity (7) which is smaller or equal to the input pressure $p_e$ of the input gas flow at the input, and the input pressure $p_e$ of the gas flow can act on a control pressure cavity (4) whose upper border is formed by the lower side of the membrane head of the regulation valve and the control pressure cavity (4) is connected to the combustion pressure $p_{br}$ via a control valve (12) actuated by a first regulating membrane (13) and a 3/2 way valve (22) is provided for which is adapted for blocking the connection between the control valve (12) and the control pressure volume (4) when the safety valve (8) is closed and simultaneously opens a connection between the medium pressure cavity (7) and the control pressure chamber (4) or which is adapted in such a fashion that, when the regulation valve is closed, the connection between the control pressure chamber (4) and the input of the gas flow is blocked and simultaneously opens a connection between the medium pressure cavity (7) and the control pressure cavity (4).

2. Multiple regulating apparatus according to claim 1, characterized in that a 2/2 way valve (21) is provided on the upper side of the actuator (1) which can, with respect to the input pressure $p_e$, close or open a longitudinal bore hole in the valve rod feeding into the control pressure chamber (4).

3. Multiple regulating apparatus according to claim 1 or 2, characterized in that the 3/2 way valve (22) is disposed on the lower side of the safety valve (8).

4. Multiple regulating apparatus according to claim 1, characterized in that the 3/2 way valve is disposed on the upper side of the actuator (1).

5. Multiple regulating apparatus according to any one of the preceding claims, characterized in that an attenuating nozzle (6), at least in the form of a bore hole of reduced diameter, is provided between the cavity (5) above the control membrane (2) and the medium pressure chamber (7).

6. Multiple regulating apparatus according to any one of the preceding claims, characterized in that the regulating membranes (13, 14) are each subject, at their lower side, to a combustion chamber pressure $p_f$, whereas the burner pressure $p_{br}$ acts on the upper side of the first regulation membrane (13) and the burner air pressure $p_1$ acts on the upper side of the second regulation membrane (14).

7. Multiple regulating apparatus according to any one of the preceding claims, characterized in that the mechanical connection between the two regulation membranes (13, 14) includes a lever mechanism having a fixed lever arm ratio.

8. Multiple regulating apparatus according to any one of the claims 1 through 6, characterized in that the mechanical connection between the two regulating membranes (13, 14) includes a lever mechanism having changeable lever arm ratios.

9. Multiple regulating apparatus according to claim 7 or 8, characterized in that the lever mechanism includes a balance arm (15) seating on a knife-edge bearing (16) which can be, in particular, horizontally displaced.

10. Multiple regulating apparatus according to claim 9, characterized in that a spring apparatus (26, 27) is disposed on one of the two balance arms, preferentially on the side of the first regulating membrane (13) for balancing on the torques on the balance arm (15) and for zero adjustment of the torque equilibrium of the balance arm.

11. Multiple regulating apparatus according to any one of the preceding claims, characterized in that the devices for overcoming the closing spring forces are electromagnets having magnet coils (19, 20) and having armatures which can be pulled-in in opposition to the spring force of associated closing spring (23, 24).

12. Multiple regulating apparatus according to claim 11, characterized in that the magnet coils (19, 20) are electrically connected, preferentially in series, to each other.

13. Multiple regulating apparatus according to claim 12, characterized in that the spring forces of the two closing springs (23, 24) and the two magnet coils (19, 20) are each dimensioned equally.

14. Multiple regulating apparatus according to any one of the preceding claims, characterized in that

a) the regulation valve and/or the safety valve has an upper valve seat (104a; 204a) having an inner clearance diameter $d_{S0}$ for the upper valve opening and having a lower valve seat (104b; 204b) disposed there below having an inner clearance diameter $d_{SU}$ for the lower valve opening and with a preferentially single piece valve body (107; 207) which has an upper and lower valve head (106a, 106b; 206a; 206b),

b) and, at least on the lower side of both valve heads (106a, 106b; 206a, 206b), an elastomer sealing means (109a, 109b; 209a, 209b) is provided for in each case and the lower sides of the sealing means (109a, 109b; 209a, 209b) seat, in the closed position of the double seated (101; 201) on the upper and the lower valve seats respectively (104a, 204a; 104b, 204b) with a defined pressure which prevents the passage of the medium being sealed,

c) and that the outer diameter $d_{T0}$ of the upper valve head (106a; 206a) and the outer diameter $d_{TU}$ of the lower valve head (106b; 206b) are each smaller than the inner clearance diameter dso of the upper valve seat (104a; 204a),

d) and that the elastomer sealing means (109a, 109b; 209a, 209b) extend radially outwardly beyond the two valve heads (106a, 106b; 206a, 206b) and have an upper outer diameter $d_{D0}$

and a lower outer diameter $d_{DU}$ which are each larger than the inner clearance diameter $d_{SO}$ of the upper valve seat (104a; 204a) and the inner clearance diameter $d_{SU}$ of the lower valve seat (104b; 204b) and

e) the outer diameter $d_{DU}$ of the lower sealing membrane (109b; 209b) is larger than the inner clearance diameter $d_{SO}$ of the upper valve seat (104a; 204a).

15. Multiple regulating apparatus according to claim 14, characterized in that the outer diameter $d_{D0}$ of the upper sealing member (109a; 209a) is larger than 1.1 times, preferentially larger or equal to 1.5 times the outer diameter $d_{T0}$ of the upper valve head (106a; 206a) and that the outer diameter $d_{DU}$ of the lower sealing member (109b; 209b) is larger than 1.1 times, preferentially larger or equal to 1.5 times, the outer diameter $d_{TU}$ of the lower valve head (106b; 206b).

16. Multiple regulating apparatus according to claim 14 or 15, characterized in that the active sealing surface of the upper (106a; 206a) and lower valve heads (106b; 206b) are equal in a closed state of the double seated valve (101; 201).

## Revendications

1. Régulateur de rapport de pression entre gaz et air dans un appareil à réglage multiple, dans lequel l'air de combustion et le combustible gazeux présentent la pression statique et $p_l$ ou respectivement $p_{br}$ et la pression du foyer $p_f$ est commandée par

a) une soupape de réglage de pression de gaz,
b) une soupape de sécurité présentant une position de fermeture commandée par ressort,
c) deux membranes de réglage, reliées mécaniquement et sur lesquelles agissent, d'un côté, la pression du foyer $p_f$ d'un moyen de production de chaleur par combustion et, d'un autre côté, la pression $p_{br}$ sur la première membrane et la pression $p_l$ sur la seconde membrane,

*caractérisé*

en ce que la soupape de réglage et la soupape de sécurité (8) sont réalisées chaque fois sous la forme de soupapes à double siège et présentent deux têtes de soupapes qui sont agencées à une distance axiale sur une tige de soupape respective et qui, à l'état fermé, sont appliquées de façon étanche chaque fois sur deux sièges de soupape,
en ce que la soupape de réglage est agencée à l'entrée de l'écoulement de gaz vers l'appareil à réglage multiple et présente à l'extrémité inférieure de la tige de soupape une tête à membrane qui est munie, du côté du bord, d'une membrane de commande (2) qui fait l'étanchéité et qui est périphérique et qui est sollicitée, sur son côté inférieur, par la pression de commande $p_{st}$ et, sur son côté supérieur, par une pression moyenne de chambre $p_m$ en provenance d'une chambre à pression moyenne (7) et plus petite ou égale à la pression d'entrée $p_e$ de l'écoulement de gaz qui afflue,
en ce que la pression d'entrée $p_e$ de l'écoulement de gaz peut agir sur une chambre de pression de commande (4) dont la délimitation supérieure forme le côté inférieur de la tête à membrane de la soupape de réglage,
en ce que la chambre de pression de commande (4) est reliée à la pression du brûleur $p_{br}$ par l'intermédiaire d'une soupape de commande (12) qui peut être actionnée par la première membrane de réglage (13), et
en ce qu'il est prévu une vanne de distribution 3/2 (22) qui est disposée de façon à ce que, lorsque la soupape de sécurité (8) est fermée, elle bloque la liaison entre la soupape de commande (12) et la chambre à pression de commande (4) et simultanément elle ouvre une liaison entre la chambre à pression moyenne (7) et la chambre à pression de commande (4), ou qui est disposée de façon à ce que, lorsque la soupape de réglable est fermée, elle bloque la liaison entre la chambre à pression de commande (4) et l'entrée de l'écoulement de gaz et simultanément elle ouvre une liaison entre la chambre à pression moyenne (7) et la chambre à pression de commande (4).

2. Appareil à réglage multiple suivant la revendication 1, caractérisé en ce que, du côté supérieur de l'élément de réglage (1), il est prévu une vanne de distribution 2/2 (21) qui peut fermer ou ouvrir par rapport à la pression d'entrée $p_e$ un trou longitudinal, de la tige de soupape, qui débouche dans la chambre à pression de commande (4).

3. Appareil à réglage multiple suivant la revendication 1 ou 2, caractérisé en ce que la vanne de distribution 3/2 (22) est prévue du côté inférieur de la soupape de sécurité (8).

4. Appareil à réglage multiple suivant la revendication 1, caractérisé en ce que la vanne de distribution 3/2 est prévue du côté supérieur de l'élément de réglage (1).

5. Appareil à réglage multiple suivant l'une des revendications précédentes, caractérisé en ce qu'entre la chambre (5) au-dessus de la membrane de commande (2) et la chambre à pression moyenne (7), il est prévu un ajutage d'amortissement (6), au moins sous la forme d'un trou à petit diamètre.

6. Appareil à réglage multiple suivant l'une des revendications précédentes, caractérisé en ce que les membranes de réglage (13, 14) sont sollicitées chaque fois sur leur côté inférieur par la pression de foyer $p_f$ tandis qu'est appliquée, sur le côté supérieur de la première membrane de réglage (13), la pression du brûleur $p_{br}$ et, sur le côté supérieur de la seconde membrane de réglage (14) la pression d'air de combustion $p_l$.

7. Appareil à réglage multiple suivant l'une des revendications précédentes, caractérisé en ce que la liaison mécanique des deux membranes de réglage (13, 14) comprend un mécanisme à levier présentant un rapport fixe de bras de levier.

8. Appareil à réglage multiple suivant l'une des revendications 1 à 6, caractérisé en ce que la liaison mécanique des deux membranes de réglage (13, 14) comprend un mécanisme à levier présentant un rapport de bras de levier variable.

9. Appareil à réglage multiple suivant la revendication 7 ou 8, caractérisé en ce que le mécanisme à levier comprend un fléau (15) en appui sur un support à couteau (16) qui peut être déplacé en particulier horizontalement.

10. Appareil à réglage multiple suivant la revendication 9, caractérisé en ce que sur un des deux bras de balance, de préférence du côté de la première membrane de réglage (13), il est prévu un dispositif à ressort (26, 27) pour tarer les couples sur le fléau (15) et pour le réglage du point zéro de l'équilibre de couples de la balance.

11. Appareil à réglage multiple suivant l'une des revendications précédentes, caractérisé en ce que le dispositif pour vaincre les forces du ressort de fermeture sont des électro-aimants comportant des bobines magnétiques (19, 20) et des armatures qui peuvent être rentrées à l'encontre de la force de ressort du ressort de fermeture (23, 24) respectif.

12. Appareil à réglage multiple suivant la revendication 11, caractérisé en ce que les bobines magnétiques (19, 20) sont reliées électriquement l'une à l'autre, sont branchées de préférence en série.

13. Appareil à réglage multiple suivant la revendication 12, caractérisé en ce que les forces de ressort des deux ressorts de fermeture (23, 24) et les deux bobines magnétiques (19, 20) sont chaque fois dimensionnées de façon égale.

14. Appareil à réglage multiple suivant l'une des revendications précédentes, caractérisé en ce que :

a) la soupape de réglage et/ou la soupape de sécurité sont réalisées avec un siège de soupape supérieur (104a; 204a) présentant un diamètre interne de passage $d_{SO}$ de l'ouverture de soupape supérieure, avec un siège de soupape inférieur (104b; 204b) agencé là-dessous et présentant un diamètre interne de passage $d_{SU}$ de l'ouverture de soupape inférieure et avec un corps de soupape (107; 207) de préférence en un pièce et qui présente une tête de soupape supérieure et une inférieure (106a, 106b; 206a, 206b),

b) au moins du côté inférieur des deux têtes de soupape (106a, 106b; 206a, 206b), il est prévu chaque fois un moyen d'étanchéité en élastomère (109a, 109b; 209a, 209) et, dans la position fermée de la soupape à double siège (101; 201), les côtés inférieurs du moyen d'étanchéité (109a, 109b; 209a, 209b) sont appliqués sur le siège de soupape supérieur et respectivement inférieur (104a, 204a; 104b, 204) avec un pressage déterminé qui empêche le passage du milieu à rendre étanche,

c) le diamètre externe $d_{T0}$ de la tête de soupape supérieure (106a; 206a) et le diamètre externe $d_{TU}$ de la tête de soupape inférieure (106b; 206b) sont chaque fois plus petits que le diamètre interne de passage $d_{S0}$ du siège de soupape supérieur (104a; 204a),

d) les moyens d'étanchéité en élastomère (109a, 109b; 209a, 209b) s'étendent plus loin vers l'extérieur, en direction radiale, que les deux têtes de soupape (106a, 106b; 206a, 206b) et présentent un diamètre externe supérieur $d_{D0}$ et respectivement un diamètre externe inférieur $d_{DU}$ qui sont chaque fois plus grands que le diamètre interne de passage dso du siège de soupape supérieur (104a; 204a) et respectivement que le diamètre interne de passage $d_{SU}$ du siège de soupape inférieur (104b; 204b), et

e) le diamètre externe $d_{DU}$ du moyen d'étanchéité inférieur (109b; 209b) est supérieur au diamètre interne de passage $d_{S0}$ du siège de soupape supérieur (104a; 204a).

15. Appareil à réglage multiple suivant la revendication 14, caractérisé en ce que le diamètre externe $d_{D0}$ du moyen d'étanchéité supérieur (109a; 209a) est supérieur à 1, 1 fois, de préférence supérieur ou égal à 1,5 fois, le diamètre externe $d_{T0}$ de la tête de soupape supérieure (106a; 206a) et en ce que le diamètre externe $d_{DU}$ du moyen d'étanchéité inférieur (109b; 209b) est supérieur à 1, 1 fois, de préférence supérieur ou égal à 1, 5 fois, le diamètre externe $d_{TU}$ de la tête de soupape inférieure (106b; 206b).

16. Appareil à réglage multiple suivant la revendication 14 ou 15, caractérisé en ce que, à l'état fermé de la soupape à double siège (101; 201), les surfaces d'étanchéité actives de la tête de soupape supérieure (106a; 206a) et de l'inférieure (106b; 206b) sont égales.

Fig.1

Fig. 2

Fig. 3

EP 0 652 501 B1

Fig. 4

Fig.5a

Fig.5b

Fig.5c